# EUROPEAN PATENT SPECIFICATION

(11) **EP 4 178 870 B1**
(45) Date of publication and mention of the grant of the patent: **25.12.2024**
(21) Application number: 21735668.2
(22) Date of filing: 23.06.2021
(51) Int. Cl.: B65D 23/00, B65D 1/02

(54) **BEVERAGE BOTTLE AND METHOD FOR JOINING PARTS OF SAID BOTTLE**
GETRÄNKEFLASCHE UND VERFAHREN ZUM VERBINDEN VON TEILEN DIESER FLASCHE
BOUTEILLE POUR BOISSON ET PROCÉDÉ POUR ASSEMBLER DES PARTIES DE LADITE BOUTEILLE

(30) Priority: 08.07.2020 SE 2050863
(43) Date of publication of application: 17.05.2023
(73) Proprietor: Aarke AB, 113 31 Stockholm (SE)
(72) Inventor: BAUDTLER, Rasmus, 116 64 Stockholm (SE)
(74) Representative: Ström & Gulliksson AB
(86) International application number: PCT/EP2021/067108
(87) International publication number: WO 2022/008245

(56) References cited:
- BE-A- 856 440
- US-A- 4 326 638
- US-A- 995 985
- US-A1- 2003 185 277
- US-A1- 2009 050 638

## Description

### Technical field

The present disclosure generally pertains to beverage bottles, and more particularly to beverage bottles for carbonators. In addition, the disclosure relates to a method for joining beverage bottle parts.

### Background art

Carbonators are used for producing carbonated beverage, such as carbonated water. Such a carbonator, a.k.a. a soda water machine, typically comprises a carbon dioxide cylinder that is connected to a nozzle that is inserted into a beverage bottle that contains liquid. The carbonator further comprises an operating arrangement that allows the user to open a valve in the carbon dioxide cylinder to introduce carbon dioxide into the beverage bottle. The carbon dioxide dissolves in the liquid in the beverage bottle.

Beverage bottles, in particular beverage bottles for carbonators, often comprise separate parts, sometimes made of different materials. Many prior art bottles are not durable, but may fall apart after a period of use. Prior art bottles may also comprise parts that are not tightly and securely fixed to each other. Such bottles may be perceived as flimsy, and the loosely attached parts may make the bottles difficult to handle, reduce the life and thereby not be environmentally friendly.

The patent publication BE856440A discloses a bottle for carbonated beverages, the bottle has a domed bottom with bosses for engaging a support ring.

### Summary of the invention

One object of the present disclosure is to provide a durable beverage bottle, not negatively affected by temperature changes, comprising separate parts that are tightly and securely fixed to each other. The beverage bottle shall allow the parts to be manufactured from different materials, and allow disassembly for cleaning, exchange of parts, reuse or recycle. The beverage bottle shall further be suitable for a carbonator, and easy and cost-effective to manufacture.

Such a beverage bottle is according to the present invention provided in form of a beverage bottle in accordance with appended claim 1.

By means of the connector part, and by fixing the stand part and connector part together using threads means, the stand part and the connector part are tightly and securely fixed to each other. The separate connector part brings the advantage that the beverage stand part needs not be directly fixed to the container part, which is beneficial should different materials be used, such as a metal stand part and a plastic container part.

The connector part may allow attachment to the container part without the container part being adapted for mechanical connection, the container part need for example not comprise a particular form (e.g. threads) where the connector part is attached. This may be beneficial in particular if the container part is to contain carbonated beverage.

The thread means for fixing the stand part and the connector part to each other typically comprises first and second cooperating thread surfaces, one of which may be provided on the connector part and the other on the stand part or on a separate part. At least one of the thread surfaces may be inclined such that mutual rotation of the first and second cooperating thread surfaces results in a mutual axial movement, tightly and securely fixing the stand part and the connector part together.

The connector part is chemically connected to the beverage container part and mechanically connected to the stand part. The connector part may comprise a first interface for chemical connection to the beverage container part. The connector part may comprise a second interface for mechanical connection to the stand part. The chemical connection may involve gluing. The mechanical connection involves the thread means. The mechanical connection allows the stand part be repeatedly releasable. The chemical connection, e.g. gluing, results in a firm and secure fixing of the connector part to the beverage container part. The chemical connection allows the beverage container part to be of a form that is suitable for containing carbonated beverage.

The connector part is adapted to be chemically attached to the beverage container part. The connector part may for this reason be manufactured of the same, or essentially the same, material as the beverage container part. For example, the connector part and beverage container part may both be of plastic material. The connector part may be manufactured from ABS and the beverage container part may be manufactured from PET. Furthermore, the connector part comprises a surface that is complementary in shape to the beverage container part. For example, the beverage container part may comprise a spherical surface and the connector part may comprise a concave surface. The beverage container part may advantageously be formed by blow moulding.

Preferably, the stand part is configured to be elastically deformed upon fixing the stand part and the connector part to each other. In this way, the stand part is tightly and securely fixed to the connector part. The stand part may for example comprise a portion that is elastically deformed when the thread means fix the stand part and the connector part to each other, i.e. when the thread means are mutually rotated. The elastically deformable portion may be thin-walled and made from a resilient material, such as a resilient metal, in particular resilient stainless steel. The stand part, or at least the elastically deformable portion thereof, may bias the stand part and the connector part against each other when the thread means have tightened the stand part and the connector part together.

Alternatively, or in addition, the connector part, or a portion thereof, may be configured to be elastically deformed upon fixing the stand part and the connector part to each other. The elastically deformable portion of the connector part may be made from a resilient material, such as a resilient plastic, in particular resilient ABS plastic.

The elastic deformation improves the thread means' ability to tightly fix the stand part and the connector part together in a repeatedly releasable manner.

The thread means are preferably configured such that the stand part is increasingly pressed towards the connector part upon mutual rotation of the thread means. Preferably, mutual rotation of the thread means results in the stand part and the connector part being moved towards each other and biased towards each other.

Preferably, the thread means are configured such that the stand part is not decreasingly pressed towards the connector part when the rotation reaches an end position. The thread means may be configured such that the stand part is increasingly pressed towards the connector part up until a certain rotation, and then maintained constantly pressed upon further rotation. Alternatively, the thread means may be configured such that the stand part is continuously increasingly pressed towards the connector part up until the rotation reaches an end position.

The beverage bottle preferably comprises stop means for retaining the thread means in an end position. The stop means may comprise two cooperating stop members that are adapted to engage when the thread means reaches the end position. The stop means may be configured to be resiliently engaged such that the stop members are retained engaged by a resilient force. At least one of the stop members may be resilient. For example, the stop member may be made of a resilient material. The stop member may be shaped so as to allow a resilient movement.

Preferably, the resilient stop member is arranged separately, preferably at a distance, from the thread means. The separate arrangement of the stop member allows the stop means to engage and disengage without affecting the thread means. The stand part and the connector part may then be tightly and securely fixed to each other by the thread means without any impact from the stop means. In particular, engaging the stop means will not result in the thread means less tightly and/or securely fixing the stand part and the connector part.

There may be two stop means configured such that the resilient forces are directed opposite one another. For example, the stop means may be configured such that the resilient forces between the stop members are directed radially from or towards each other and aligned with each other.

The stop means may be configured such that the resilient force that retain the stop members engaged is not aligned with the force generated by the thread means upon mutual rotation thereof. In this way, the force generated by the thread means is not impacted by the force that retain the stop members engaged. The force of the stop members may be directed in the radial direction. The force of the thread means may be directed in the axial direction. The axial direction is in this disclosure the direction in which the stand part and the connector part are moved towards or away from each other by mutual rotation of the thread means.

The thread means may comprise first and second cooperating thread surfaces wherein the connector part comprises the first thread surface and the beverage bottle further comprising a lock part that comprises the second thread surface. The lock part may also comprise one of the stop members.

The lock part part, or a portion thereof, may be configured to be elastically deformed upon fixing to the connector part. The elastically deformable portion of the lock part may be made from a resilient material, such as a resilient plastic, in particular resilient ABS plastic. The entire lock part may be manufactured from resilient ABS plastic.

Portions of one or more of the stand part, the connector part, and the lock part may be configured to be elastically deformed upon fixing the parts together by the thread means. Preferably, portions of each of the three parts are elastically deformed.

The stand part and the connector part may comprise cooperating rotation-preventing means. This is particularly beneficial should there be a desire to place a gasket, e.g. an O-ring, between the stand part and the connector part or the beverage container part. It is believed beneficial to avoid a rotational movement at a contact surface provided with a gasket, and instead only allow a translative (straight axial) movement. Also, the gasket would undesirably impede a rotational movement through friction. The beverage bottle may comprise a gasket between the stand part and the connector part or the beverage container. The rotation-preventing means may be a tongue-groove connection.

The rotation-preventing means may be the above-mentioned portion of the stand part that is elastically deformed when the thread means fix the stand part and the connector part to each other. Said portion thus advantageously serves a dual purpose.

The beverage bottle is a beverage bottle for a carbonator, i.e. a bottle for carbonated beverage that is carbonated in the bottle. The beverage bottle for a carbonator is configured to withstand an inner pressure of at least 20 bar.

The above object is also met by a method for joining a beverage container part and a stand part of a beverage bottle comprising the steps of A) chemically attaching a connector part to the beverage container part, B) bringing the stand part and the connector part together, and C) tightening thread means to fix the stand part to the connector part.

The advantages of the resulting beverage bottle have been discussed above. The method may involve steps corresponding to the above-mentioned features of the bottle parts. For example, step C) may be performed by rotating the stand part or by rotating a separate part, e.g. the lock part. Similarly, the connector part may be chemically attached to the beverage container part by gluing. Step C preferably involves elastically deforming the stand part and/or the connector part.

### Brief description of the drawings

The present invention will be described further below by way of examples and with reference to the enclosed drawings, in which:
- Figure 1: shows a beverage bottle 1,
- Figure 2: is an exploded side view of the beverage bottle 1 of figure 1, showing a beverage container part 2, a stand part 3, a connector part 4 and a lock part,
- Figure 3: is a perspective view of the parts of figure 2,
- Figures 4-6: illustrates a method A, B, C of joining the parts of figures 2 and 3,
- Figures 7-8: shows the lock part 5 and the connector part 4 in more detail, and
- Figure 9: illustrates a cross-section through the bottom part of the beverage bottle of figure 1.

### Detailed description of embodiments

The disclosed embodiments will now be described more fully hereinafter with reference to the accompanying drawings. Like numbers refer to like elements throughout the description and drawings.

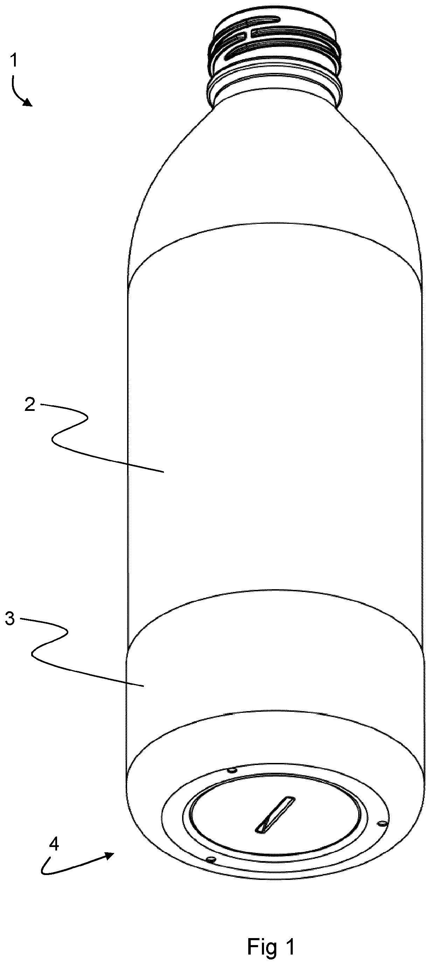

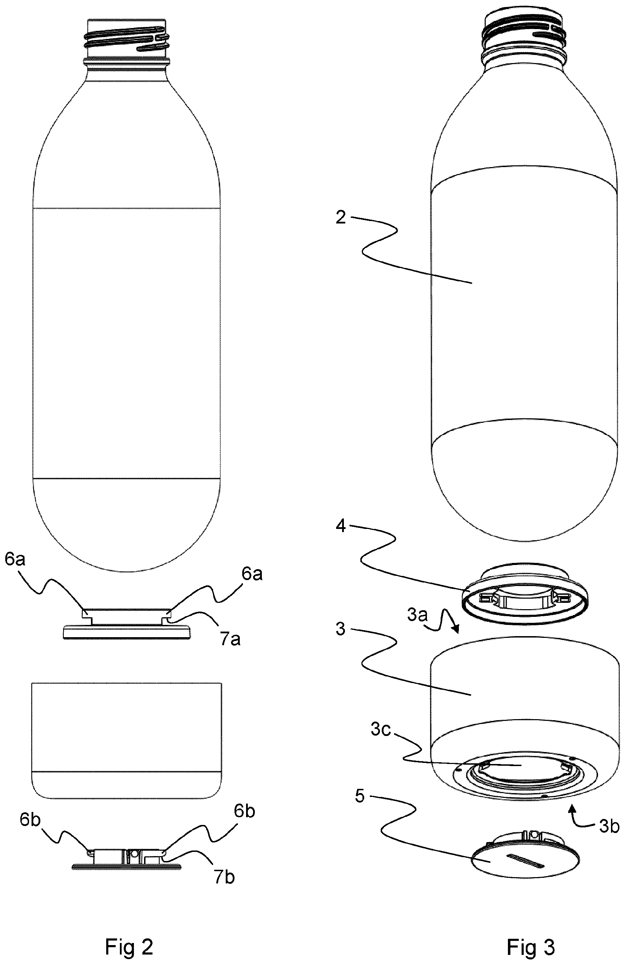

Figure 1 shows a beverage bottle 1 for a carbonator, and figures 2 and 3 show the same bottle 1 in exploded views. The beverage bottle 1 comprises a plastic beverage container part 2 that is intended to hold a beverage. The beverage container part 2 comprises a threaded mouth that can be sealed with a screw cap (not shown). The beverage bottle 1 may be connected to a carbonator by the threads on the mouth or by means of the flange or collar provided beneath the threads. The beverage container part 2 is preferably made of PET plastics, manufactured by blow-moulding and comprises a rounded, more precisely semi-spherical, bottom part as is shown in figures 2 and 3.

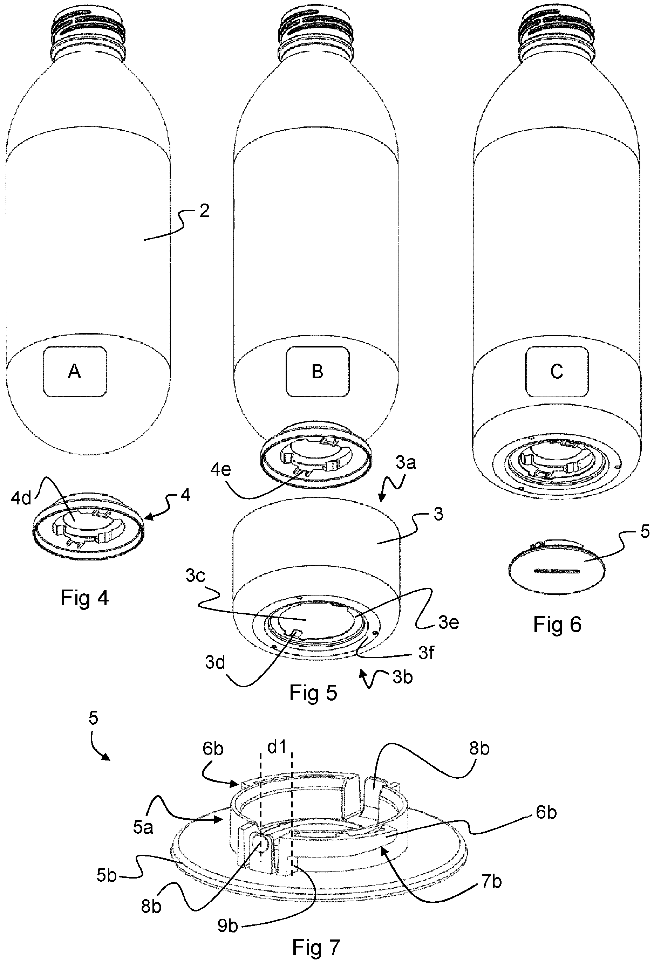

The beverage bottle 1 further comprises a stand part 3, preferably of metal, shown in more detail in figure 5. The stand part 3 is here cup-shaped and thin-walled with an open top 3a and bottom 3b furnished with a central stand part opening 3c. A flat, ring-shaped stand surface 3f is provided on the stand part bottom 3b, on which stand surface 3f the beverage bottle 1 is intended to stand. In this example, the metal is resilient stainless steel albeit other metals such as e.g. aluminium are also conceivable.

The bottom 3b of the stand part 3 is indented centrally, which means that the edge 3e of the stand part opening 3c is raised from the stand surface 3f. Two tongues 3d, opposing each other, protrude radially inwards from the edge 3e of the stand part opening. The tongues 3d are inclined axially upwards, towards the beverage container part 2 when assembled.

It is not ideal to glue a metal stand part to the plastic beverage container part 2 as a metal-to-plastic glue joint may be negatively affected by stresses that result from temperature changes that the beverage bottle 1 may be affected to. Such a metal-to-plastic glue joint may further degrade over time or as a result of impacts.

When the beverage container part 2 is manufactured by blow-moulding, it would from a manufacturing standpoint be challenging to form integral mechanical fitting means for a stand part in one piece with the beverage container part 2. Also, the wall of the beverage container part 2 shall preferably be of even thickness with no sharp corners, in order to withstand high internal pressures. Such a beverage container part 2 is of a form that is suitable for containing carbonated beverage.

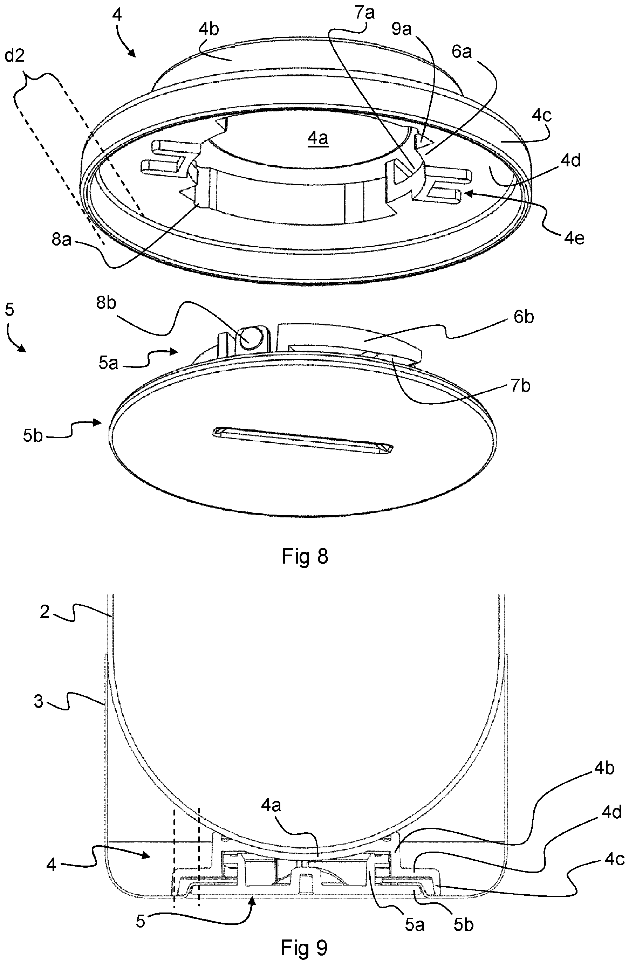

A plastic connector part 4, shown in more detail in figures 8 and 9, is provided for connecting the beverage container part 2 and the stand part 3 to each other. The connector part 4 comprises a top concave disc 4a, an upper cylindrical element 4b, a lower cylindrical element 4c and a ring-shaped disc 4d. The upper cylindrical element 4b protrudes axially from an upper side (the side facing the beverage container part 2) of the ring shaped disc 4d and the lower cylindrical element 4c protrudes axially from a lower side (the side facing away from the beverage container part 2) of the ring shape disc 4d. The upper cylindrical element 4b has a smaller diameter than the lower cylindrical element 4c. The upper and lower cylindrical elements 4b, 4c are of essentially the same height, i.e. extension in the longitudinal direction of the beverage bottle 1 when assembled. The diameter of the upper cylindrical element 4b equals the inner diameter of the ring-shaped disc 4d, and the diameter of the lower cylindrical element 4c equals the outer diameter of the ring-shaped disc 4d.

The connector part 4 is glued to the bottom of the plastic beverage container part 2. The concave disc 4a is complementary in shape to the spherical bottom of the beverage container part 2 to ensure a secure glue j oint, in this example a plastic-to-plastic glue joint. The connector part 4 comprises a first interface 4a configured to chemically attach the connector part 4 to the beverage container part 2.

The connector part 4 is mechanically connected to the stand part 3. The lower cylindrical element 4c comprises a bottom surface, in this example a ring shaped surface, that is intended to abut against the stand part 3. The ring-shaped disc 4d, more precisely the bottom surface thereof, comprises two grooves 4e, arranged opposing each other on either side of the opening through the ring-shaped disc 4d. The grooves 4e cooperate with the tongues 3d of the stand part 3 to form a rotation-preventing connection.

The connector part 4, more precisely the upper cylindrical element 4b and the ring-shaped disc 4d, comprises connector part threads 6a and connector part stop members 8a. As can be seen (see e.g. figures 2 and 8) there are two radially opposing connector part threads 6a and two radially opposing connector part stop members 8a. The connector part stop members 8a are here formed as cut-outs in the inner edge surface of the upper cylindrical element 4b and in the ring-shaped disc 4d.

The connector part threads 6a comprise connector part thread surfaces 7a that in this example are parallel with the radial direction, or lie in a radial plane, and thus not inclined. In other embodiments, the connector part thread surfaces 7a may be inclined with respect to the radial direction. The connector part threads 6a end in a connector part counter surface 9a that forms a radial stop surface.

A plastic lock part 5, shown in more detail in figures 7-9, may be provided for fixing the stand part 3 and the connector part 4 to each other. By the term fixing is meant that the parts are securely attached to one another with no play. The lock part 5 and the connector part 4 are adapted to clamp the stand part 3 between them. As the connector part 4 is glued to the beverage container part 2, the stand part 3 will be fixed to the beverage container part 2.

The lock part 5 comprises a disc-shaped bottom part 5b from which a cylindrical portion 5a protrudes axially. The cylindrical portion 5a forms lock part threads 6b with lock part counter surfaces 9b and separately arranged lock part resilient stop members 8b. There are two radially opposing lock part threads 6b. There are two radially opposing lock part resilient stop members 8b. The bottom side of the disc-shaped bottom part 5b is furnished with a slot that can be engaged by e.g. a coin or a screwdriver to rotate the lock part 5, see especially figures 8 and 9.

The lock part threads 6b are formed as circumferential thread bodies protruding radially from the cylindrical portion 5a outer wall. Each resilient stop member 8b can be said to be formed by two cut-outs in the cylindrical portion 5a, which allows the stop members 8b to elastically deform in the radial direction. As is illustrated by the dashed lines in figure 7, each resilient stop member 8b is provided at a distance d1 from the adjacent lock part thread 6b, more precisely from the counter surface 9b thereof. The resilient stop members 8b are formed as beam elements that extend in the axial direction from the disc-shaped bottom part 5b.

The resilient stop members 8b are configured to be elastically deformable in the radial direction, whereas the lock part threads 6b are configured to convert a rotational movement into an axial movement. The resilient stop members 8b elastically deform independently from the lock part threads 6b. As shown in figure 7, the lock part threads 6b comprise lock part thread surfaces 7b that operationally face the axial direction whereas the resilient stop members 8b operationally face the radial direction.

In other known thread connections with stop means that may be engaged for retaining the connection in an end position, the stop means are typically integrated in a thread surface of the thread connection and elastically deformed or moved in the axial direction of the thread connection. As a result, the axial force obtained by the thread connection decreases slightly after such stop means have been engaged.

In the present example, the stop means are not integrated in the thread surfaces 7a, 7b and the lock part 5 is not decreasingly pressed towards the connector part 4 when the mutual rotation reaches an end position. In addition, the present resilient stop member 8b is not deformed in the axial direction. In an alternative embodiment, a stop member may be provided as a radial protrusion on the lock part thread 6b and the lock part thread 6b be elastically deformable in the radial direction. The thread means of the present example functions similar to a bayonet-fitting, but with no decrease in the axial force at the end position, e.g. after the stop means have been engaged.

Figure 7, and in particular figure 8, illustrate that the lock part thread surfaces 7b comprise a first section (to the right in figure 8) that is inclined with respect to the radial direction, and a second section (to the left in figure 8) that is parallel with the radial direction. Such a configuration results in the lock part, and thus the stand part, being increasingly pressed towards the connector part up until a certain mutual rotation, and then maintained constantly pressed upon further rotation. In other embodiments, each lock part thread surface 7b may be continuously inclined with respect to the radial direction. Then the pressure will be continuously increasingly upon rotation.

Figures 4 to 6 illustrate a method A-C of joining the beverage container part 2, the stand part 3, the connector part 4 and the lock part 5.

In a first step A, the connector part 4 is chemically attached by gluing to the beverage container part 2. This step involves adding a glue to the top surface (concave disc 4a) of the connector part 4 or to the bottom of the beverage container part 2 and then bringing the connector part 4 and the beverage container part 2 together. The glue is preferably UV hardening and the connector part 4 is for this reason preferably translucent to allow the ultra violet light to pass through. In this example, the connector part 4 is made of ABS plastic. Step A may thus involve exposing the glue joint to UV light.

In a second step B, the stand part 3 is brought to the connector part 4, and the tongues 3d and grooves 4e are engaged to provide a rotation-preventing connection. By means of the cooperating tongues 3d and grooves 4e, the stand part 3 cannot rotate with respect to the beverage container part 2.

In a third step C, the lock part 5 is screwed into the connector part 4 by engaging the connector part threads 6a and the lock part threads 6b. In this step, the stand part 3 is fixed to the connector part 4, and thus to the beverage container part 2.

As has been described, in the present embodiment the lock part thread surfaces 7b are inclined with respect to the radial direction whereas the cooperating connector part thread surfaces 7a are not inclined. In other embodiments, the connector part thread surfaces 7a are at least partially inclined whereas the lock part thread surfaces 7b are not, or both 7a, 7b are inclined. The connector part 4 comprises a second interface configured to mechanically attach the connector part 4 to the stand part 3.

The diameter of the stand part opening 3c is smaller than the diameter of the lower cylindrical element 4c of connector part 4. The diameter of the lower cylindrical element 4c falls in the range of the inner and outer diameters or the ring-shaped stand surface 3f, such that the lower cylindrical element 4c abuts internally against the inner side of the stand surface 3f. The cylindrical portion 5a of the lock part 5 has a smaller diameter than the stand part opening 3c and thus passes there through and is then screwed into the connector part 4. The diameter of the disc-shaped bottom part 5b is slightly smaller than the lower cylindrical element 4c, such that the disc-shaped bottom part 5b may be brought inside the lower cylindrical element 4c (when the lock part 5 and the connector part 4 are screwed together) to lie against the ring-shaped disc 4d. The diameter of the disc-shaped bottom part 5b and the outer diameter of the ring-shaped disc 4d are essentially the same.

As the connector part threads 6a and the lock part threads 6b are increasingly engaged when the lock part 5 is rotated in relation to the connector part 4, the lock part 5 and the connector part 4 move axially closer to one another and increasingly clamp the stand part 3 between them. In this process, the tongues 3d are axially resiliently bent until they end up aligned in parallel with the plane of the edge 3e of the stand part opening 3c.

Thus, the stand part 3 is clamped, and firmly held, between the lock part 5 and the connector part 4. The stand part 3 is particularly firmly held since the tongues 3f are elastically deformed as the stand part 3 is clamped between the lock part 5 and the connector part 4. More precisely, the tongues 3f are clamped between the disc-shaped bottom part 5b and the ring shaped disc 4d of the connector part 4. At the same time, the inner side of the stand surface 3f abuts against the lower cylindrical element 4c.

As is illustrated by the dashed lines is figures 8 and 9, there is a distance d2, extending both radially and axially, between the areas where the lower cylindrical element 4c abuts against the stand part 3 and where the disc-shaped bottom part 5b abuts against the stand part 3. This distance d2 increases the portion of the stand part 3 that is elastically deformed and is beneficial for firmly clamping the stand part 3. Referring to figure 9, the lock element 5 presses the thin-walled stand part 3 axially upwards (towards the beverage container part 2) whereas the lower cylindrical element 4c presses the thin-walled stand part 3 axially downwards in a radially outer region.

In addition, the lock element, in particular the disc-shaped bottom part 5b, may be elastically deformed and thus assist in clamping the stand part 3. This is obtained by the central portion of the disc-shaped bottom part 5b being pulled towards the connector part 4 by the cylindrical portion 5a (provided with the lock part threads 6b) while the outer peripheral portion of the disc-shaped bottom part 5b is pushed away from the connector part 4 by the lower cylindrical element 4c. The disc-shaped bottom part 5b is thus warped.

When the mutual rotation of the lock part 5 and the connector part 4 reaches an end position, at which position the counter surfaces 9a, 9b abut each other, the lock part stop members 8b and connector part stop members 8a engage. More in detail, the lock part resilient stop members 8b, which during the mutual rotation have been elastically deformed by and slid along the inner surface of the upper cylindrical element 4b, now spring back out radially into the receiving connector part stop members 8a. The cooperating lock part stop members 8b and connector part stop members 8a hinder the lock part 5 from being screwed in the reverse direction out from the connector part 4. However, if a sufficiently large rotational force is applied to the lock part 5, the lock part resilient stop members 8b will elastically deform radially inwards and leave the connector part stop members 8a. The mechanical attachment of the stand part to the connector part is thus repeatedly releasable.

Thread means can be defined as means that upon mutual rotation around an axis causes an axial movement along that axis. In other words, thread means convert a rotational movement into a translative movement.

The beverage bottle 1 is intended to be used with a carbonator. Such bottles 1 are repeatedly subject to high internal pressures. For this reason, the bottle 1, or more precisely the beverage container part 2, is preferably configured for use with a carbonator which implies that the beverage bottle 1 should withstand an inner pressure of at least 20 bar.

## Claims

1. A beverage bottle (1) for carbonated beverage comprising
- a beverage container part (2),
- a stand part (3),
- a separate connector part (4) for connecting the stand part (3) and the beverage container part (2) to each other, and
- thread means (6a, 6b) for fixing the stand part (3) and the connector part (4) to each other,
wherein the beverage bottle (1) is for a carbonator, i.e. for carbonated beverage that is carbonated in the beverage bottle (1), and configured to withstand an inner pressure of at least 20 bar, and
wherein the connector part (4) is adapted to be chemically attached to the beverage container part (2) by gluing, and the connector part (4) comprises a surface (4a) that is complementary in shape to the beverage container part (2).

2. The beverage bottle (1) of claim 1, wherein the stand part (3) and/or the connector part (4) is configured to be elastically deformed upon fixing the stand part (3) and the connector part (4) to each other.

3. The beverage bottle (1) of any preceding claim, wherein the thread means (6a, 6b) are configured such that the stand part (3) is increasingly pressed towards the connector part (4) upon mutual rotation of the thread means (6a, 6b).

4. The beverage bottle (1) of claim 3, wherein the thread means (6a, 6b) are configured such that the stand part (3) is not decreasingly pressed towards the connector part (4) when the rotation reaches an end position.

5. The beverage bottle (1) of claim 4, further comprising stop means for retaining the thread means (6a, 6b) in an end position.

6. The beverage bottle (1) of claim 5, wherein the stop means comprises two cooperating stop members (8a, 8b) that are adapted to engage when the thread means (6a, 6b) reaches the end position.

7. The beverage bottle (1) of claim 6, wherein at least one (8b) of the stop members is resilient such that the stop members (8a, 8b) are retained engaged by a resilient force.

8. The beverage bottle (1) of claim 7, wherein the resilient stop member (8b) is arranged separately, preferably at a distance (d1), from the thread means (6a, 6b).

9. The beverage bottle (1) of claim 8, comprising two stop means being configured such that the resilient forces are directed opposite one another.

10. The beverage bottle (1) of any one of claims 7 to 9, wherein the stop means are configured such that the resilient force that retain the stop members (8a, 8b) engaged is not aligned with the force generated by the thread means (6a, 6b) upon mutual rotation thereof.

11. The beverage bottle (1) of any preceding claim, wherein the thread means (6a, 6b) comprises first and second cooperating thread surfaces (7a, 7b), the connector part (4) comprising the first thread surface (7a), and the beverage bottle (1) further comprising a lock part (5) comprising the second thread surface (7b).

12. The beverage bottle (1) of claim 11 and any one of claims 6 to 10, wherein the lock part (5) comprises one (8b) of the stop members.

13. The beverage bottle of any preceding claim, wherein the stand part (3) and the connector part (4) comprise cooperating rotation-preventing means (4e, 3d).

14. A method for joining a beverage container part (2) and a stand part (3) of a beverage bottle (1) for carbonated beverage according to claim 1 comprising the steps of
A) chemically attaching a connector part (4) to the beverage container part (2) by gluing,
B) bringing the stand part (3) and the connector part (4) together, and
C) tightening thread means (6a, 6b) to fix the stand part (3) to the connector part (4).

## Patentansprüche

1. Getränkeflasche (1) für ein kohlensäurehaltiges Getränk, die Folgendes aufweist:
ein Getränkebehälterteil (2),
ein Standteil (3),
ein separates Verbindungsteil (4) zum miteinander Verbinden des Standteils (3) und des Getränkebehälterteils (2), und
Gewindemittel (6a, 6b) zur Befestigung des Standteils (3) und des Verbindungsteils (4) aneinander,
wobei die Getränkeflasche (1) für einen Wassersprudler bestimmt ist, d.h. für ein kohlensäurehaltiges Getränk, das in der Getränkeflasche (1) karbonisiert bzw. aufgesprudelt wird, und für einen Innendruck von mindestens 20 bar ausgelegt ist, und
wobei das Verbindungsteil (4) so angepasst ist, dass es chemisch an dem Getränkebehälterteil (2) durch Verkleben befestigt werden kann, und das Verbindungsteil (4) eine Oberfläche (4a) aufweist, die in ihrer Form komplementär zu dem Getränkebehälterteil (2) ist.

2. Getränkeflasche (1) nach Anspruch 1, wobei das Standteil (3) und/oder das Verbindungsteil (4) so konfiguriert sind/ist, dass sie/es sich beim aneinander Befestigen des Standteils (3) und des Verbindungsteils (4) elastisch verformen/verformt.

3. Getränkeflasche (1) nach einem der vorhergehenden Ansprüche, wobei die Gewindemittel (6a, 6b) so ausgebildet sind, dass das Standteil (3) bei gemeinsamer Drehung der Gewindemittel (6a, 6b) zunehmend in Richtung des Verbindungsteils (4) gedrückt wird.

4. Getränkeflasche (1) nach Anspruch 3, wobei die Gewindemittel (6a, 6b) so ausgebildet sind, dass das Standteil (3) nicht abnehmend gegen das Verbindungsteil (4) gedrückt wird, wenn die Drehung eine Endposition erreicht.

5. Getränkeflasche (1) nach Anspruch 4 die ferner Anschlagmittel aufweist, um die Gewindemittel (6a, 6b) in einer Endposition zu halten.

6. Getränkeflasche (1) nach Anspruch 5, wobei die Anschlagmittel zwei zusammenwirkende Anschlagglieder (8a, 8b) aufweisen, die so ausgelegt sind, dass sie ineinandergreifen, wenn die Gewindemittel (6a, 6b) die Endposition erreichen.

7. Getränkeflasche (1) nach Anspruch 6, wobei mindestens eines (8b) der Anschlagelemente elastisch ist, so dass die Anschlagelemente (8a, 8b) durch eine elastische Kraft in Eingriff gehalten werden.

8. Getränkeflasche (1) nach Anspruch 7, wobei der elastische Anschlag (8b) separat, vorzugsweise in einem Abstand (d1), von den Gewindemitteln (6a, 6b) angeordnet ist.

9. Getränkeflasche (1) nach Anspruch 8, die zwei Anschlagmittel aufweist, die so gestaltet sind, dass die elastischen Kräfte einander entgegengesetzt gerichtet sind.

10. Getränkeflasche (1) nach einem der Ansprüche 7 bis 9, wobei die Anschlagmittel so konfiguriert sind, dass die elastische Kraft, die die Anschlagglieder (8a, 8b) im Eingriff hält, nicht mit der Kraft ausgerichtet ist, die von den Gewindemitteln (6a, 6b) bei deren gemeinsamer Drehung erzeugt wird.

11. Getränkeflasche (1) nach einem der vorhergehenden Ansprüche, wobei das Gewindemittel (6a, 6b) erste und zweite zusammenwirkende Gewindeflächen (7a, 7b) aufweisen, wobei das Verbindungsteil (4) die erste Gewindefläche (7a) aufweist und die Getränkeflasche (1) ferner ein Verschlussteil (5) aufweist, das die zweite Gewindefläche (7b) aufweist.

12. Getränkeflasche (1) nach Anspruch 11 und einem der Ansprüche 6 bis 10, wobei das Verschlussteil (5) eines (8b) der Anschlagglieder aufweist.

13. Getränkeflasche nach einem der vorhergehenden Ansprüche, wobei das Standteil (3) und das Verbindungsteil (4) zusammenwirkende Mittel (4e, 3d) zum Verhindern einer Drehung aufweisen.

14. Verfahren zum Verbinden eines Getränkebehälterteils (2) und eines Standteils (3) einer Getränkeflasche (1) für ein kohlensäurehaltiges Getränk nach Anspruch 1, wobei das Verfahren die folgenden Schritte aufweist:
A) chemisches Befestigen eines Verbindungsteils (4) an dem Getränkebehälterteil (2) durch Verkleben,
B) Zusammenbringen des Standteils (3) und des Verbindungsteils (4), und
C) Festziehen der Gewindemittel (6a, 6b) zum Befestigen des Standteils (3) am Verbindungsteil (4).

## Revendications

1. Bouteille de boisson (1) pour boisson gazéifiée comprenant
- une partie contenant de boisson (2),
- une partie socle (3),
- une partie raccord (4) distincte pour raccorder la partie socle (3) et la partie contenant de boisson (2) l'une à l'autre, et
- des moyens de vissage (6a, 6b) pour fixer la partie socle (3) et la partie raccord (4) l'une à l'autre,
dans laquelle la bouteille de boisson (1) est pour un gazéificateur, c'est-à-dire pour une boisson gazéifiée qui est gazéifiée dans la bouteille de boisson (1), et configurée pour résister à une pression intérieure d'au moins 20 bars, et
dans laquelle la partie raccord (4) est adaptée pour être fixée chimiquement à la partie contenant de boisson (2) par collage, et la partie raccord (4) comprend une surface (4a) de forme complémentaire de celle de la partie contenant de boisson (2).

2. Bouteille de boisson (1) selon la revendication 1, dans laquelle la partie socle (3) et/ou la partie raccord (4) est configurée pour être déformée élastiquement lors de la fixation de la partie socle (3) et de la partie raccord (4) l'une à l'autre.

3. Bouteille de boisson (1) selon l'une quelconque des revendications précédentes, dans laquelle les moyens de vissage (6a, 6b) sont configurés de sorte que la partie socle (3) soit pressée de manière croissante vers la partie raccord (4) lors de la rotation mutuelle des moyens de vissage (6a, 6b).

4. Bouteille de boisson (1) selon la revendication 3, dans laquelle les moyens de vissage (6a, 6b) sont configurés de sorte que la partie socle (3) ne soit pas pressée de manière décroissante vers la partie raccord (4) lorsque la rotation atteint une position de fin.

5. Bouteille de boisson (1) selon la revendication 4, comprenant en outre des moyens d'arrêt pour retenir les moyens de vissage (6a, 6b) dans une position de fin.

6. Bouteille de boisson (1) selon la revendication 5, dans laquelle les moyens d'arrêt comprennent deux éléments d'arrêt coopérant (8a, 8b) qui sont adaptés pour se mettre en prise lorsque les moyens de vissage (6a, 6b) atteignent la position de fin.

7. Bouteille de boisson (1) selon la revendication 6, dans laquelle au moins l'un (8b) des éléments d'arrêt est élastique de sorte que les éléments d'arrêt (8a, 8b) soient retenus en prise par une force élastique.

8. Bouteille de boisson (1) selon la revendication 7, dans laquelle l'élément d'arrêt élastique (8b) est agencé séparément, préférentiellement à une distance (d1), des moyens de vissage (6a, 6b).

9. Bouteille de boisson (1) selon la revendication 8, comprenant deux moyens d'arrêt qui sont configurés de sorte que les forces élastiques soient dirigées à l'opposé l'une de l'autre.

10. Bouteille de boisson (1) selon l'une quelconque des revendications 7 à 9, dans laquelle les moyens d'arrêt sont configurés de sorte que la force élastique qui retient les éléments d'arrêt (8a, 8b) en prise ne soit pas alignée sur la force générée par les moyens de vissage (6a, 6b) lors de leur rotation mutuelle.

11. Bouteille de boisson (1) selon l'une quelconque des revendications précédentes, dans laquelle les moyens de vissage (6a, 6b) comprennent des première et deuxième surfaces de vissage coopérant (7a, 7b), la partie raccord (4)) comprenant la première surface de vissage (7a), et la bouteille de boisson (1) comprenant en outre une partie verrouillage (5) comprenant la deuxième surface de vissage (7b).

12. Bouteille de boisson (1) selon la revendication 11 et l'une quelconque des revendications 6 à 10, dans laquelle la partie verrouillage (5) comprend l'un (8b) des éléments d'arrêt.

13. Bouteille de boisson selon l'une quelconque des revendications précédentes, dans laquelle la partie socle (3) et la partie raccord (4) comprennent des moyens anti-rotation coopérant (4e, 3d).

14. Procédé de jonction d'une partie contenant de boisson (2) et d'une partie socle (3) d'une bouteille de boisson (1) pour boisson gazéifiée selon la revendication 1, comprenant les étapes consistant à :
A) fixer chimiquement une partie raccord (4) à la partie contenant de boisson (2) par collage,
B) assembler la partie socle (3) et la partie raccord (4) l'une à l'autre, et
C) serrer des moyens de vissage (6a, 6b) pour fixer la partie socle (3) à la partie raccord (4).
